(19) **Europäisches Patentamt**
**European Patent Office**
**Office européen des brevets**

(11) Publication number: **0 173 477**
**A2**

(12) # EUROPEAN PATENT APPLICATION

(21) Application number: 85305542.4

(22) Date of filing: 02.08.85

(51) Int. Cl.⁴: **B60R 22/20**

(30) Priority: 18.08.84 GB 8421049

(43) Date of publication of application:
05.03.86 Bulletin 86/10

(84) Designated Contracting States:
DE FR GB IT SE

(71) Applicant: BRITAX (WINGARD) LIMITED
Chandler Road
Chichester Sussex, PO19 2UG(GB)

(72) Inventor: Else, Robert Frederick
49 Summerfields Locks Heath
Nr. Southampton Hampshire(GB)

(74) Representative: Hollinghurst, Antony
Britax Division (Patents) Kingsham Road
Chichester West Sussex PO19 2UG(GB)

(54) Anchorage means for vehicle safety belts.

(57) An adjustable shoulder anchorage assembly for a vehicle safety belt, comprises a vertically extending track (10) mounted on the interior of a vehicle body above the level of the shoulders of an occupant of an adjacent seat, and a traveller (22) mounted on the track (10). A guide member (24) is secured to the traveller (22) and has a slot for receiving the strap of a safety belt. A latch member (28) is movable transversely of the track (10) between an engaged position in which a latching formation thereon is in engagement with one of a series of complementary formations (12) on the track (10) so as to inhibit movement of the traveller (22) along the track (10) and a release position in which the latching formation is disengaged from the track (10). A cam follower (34), on manual release means (38), is operative to engage in a slot (36) on the latch member (28) so as to move the latch member (28) between its engaged and its release positions in response to movement of the manual release means (38), and resilient means (42) are operative to bias the first cam formation (34) into a position in which the latch member (28) is in its engaged position. The part of slot (36) in which the cam follower (34) engages when the latch member (28) is in its engaged position is oriented perpendicular to the direction of movement of the latch member (28) between its engaged position and its release position. Thus, application of a force to the latch member (28) in a direction tending to move it towards its release position does not cause the movement of the cam follower (34) necessary to permit such movement of the latch member (28).

FIG.1

This invention relates to anchorage means for vehicle safety belts of the kind which are adapted to be mounted on a vehicle body above the shoulder level of the occupant of an adjacent seat for reception of the shoulder strap of the safety belt. The present invention is particularly concerned with the provision of a shoulder anchorage of adjustable height.

DE-A-2947391 discloses an adjustable shoulder anchorage assembly comprising a vertically extending track mounted on the interior of a vehicle body above the level of the shoulders of an occupant of an adjacent seat, a traveller mounted on the track, a latch member pivotally mounted on the traveller and carrying a latching formation for engagement with complementary formations on the track so as to inhibit movement of the traveller along the track, and a guide member having a slot for receiving the strap of a safety belt pivotally mounted on the latch member so that the guide member is angularly movable about a horizontal axis. The latching formation can be disengaged from the complementary formations on the track by pressing on the pivotal mounting means for the guide member. However, the total mass of the latch member, the guide member and the pivotal mounting of the latter is such that, in the event of the vehicle being subject to high lateral acceleration, for example as a result of impact during an accident, a substantial force tending to disengage the latching formation may be produced, with the result that the resilient biasing means has to be capable of exerting a substantially greater force. This means that considerable effort is required to disengage the latch so as to be able to adjust the height of the shoulder anchorage.

According to the invention, an adjustable shoulder anchorage assembly comprises a vertically extending track mounted on the interior of a vehicle body above the level of the shoulders of an occupant of an adjacent seat, a traveller mounted on the track, a guide member secured to the traveller and having a slot for receiving the strap of a safety belt, a latch member movable transversely of the track between an engaged position in which a latching formation thereon is in engagement with one of a series of complementary formations on the track so as to inhibit movement of the traveller along the track and a release position in which the latching formation is disengaged from the track, manual release means having a first cam formation operative to engage with a second cam formation on the latch member operative to move the latch member between its engaged and its release positions in response to movement of the manual release means, and resilient means operative to bias the first cam formation into a position in which the latch member is in its engaged position, the mutually engaging surfaces of the cam formations being so oriented relative to the direction of movement of the latch member between its engaged position and its release position that application of a force to the latch member in a direction tending to move it towards its release position does not cause the movement of the first cam formation necessary to permit such movement of the latch member.

Preferably the mutually engaging surfaces of the cam formations are substantially perpendicular to the direction of movement of the latch member between its engaged position and its release position.

Thus the cam formations inhibit accidental movement of the latch member to its release position due to inertia as a result of high lateral acceleration of the vehicle, for example due to impact.

Embodiments of the invention will now be described, by way of example, with reference to the accompanying drawings, in which:

Figure 1 is a cross-sectional view of an adjustable shoulder anchorage assembly in accordance with the invention, taken on a vertical plane extending transversely relative to the motor car in which the assembly is to be used;

Figure 2 is a cross-sectional view taken on the line 2 - 2 in Figure 1, showing the line 1 - 1 on which the section of Figure 1 is taken;

Figure 3 is a cross-sectional view, similar to Figure 1, of an alternative shoulder anchorage assembly in accordance with the invention; and

Figure 4 is a cross-sectional view taken on the line 4 - 4 in Figure 3, showing the line 3 - 3 on which the section of Figure 3 is taken.

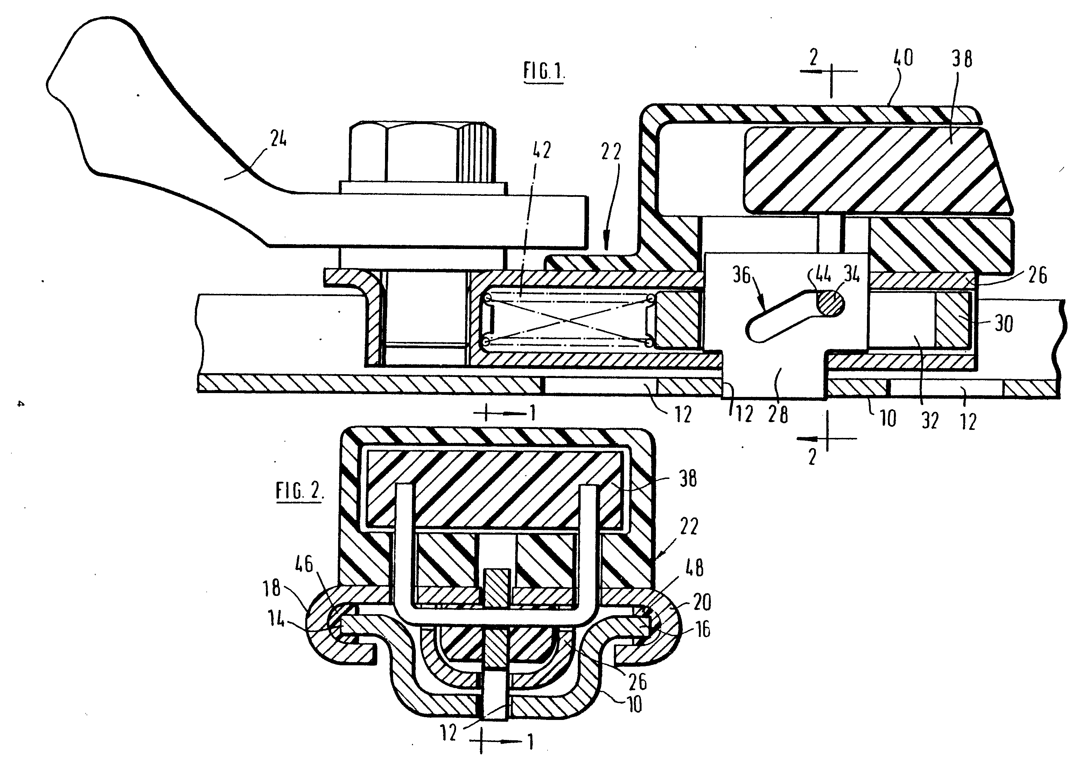

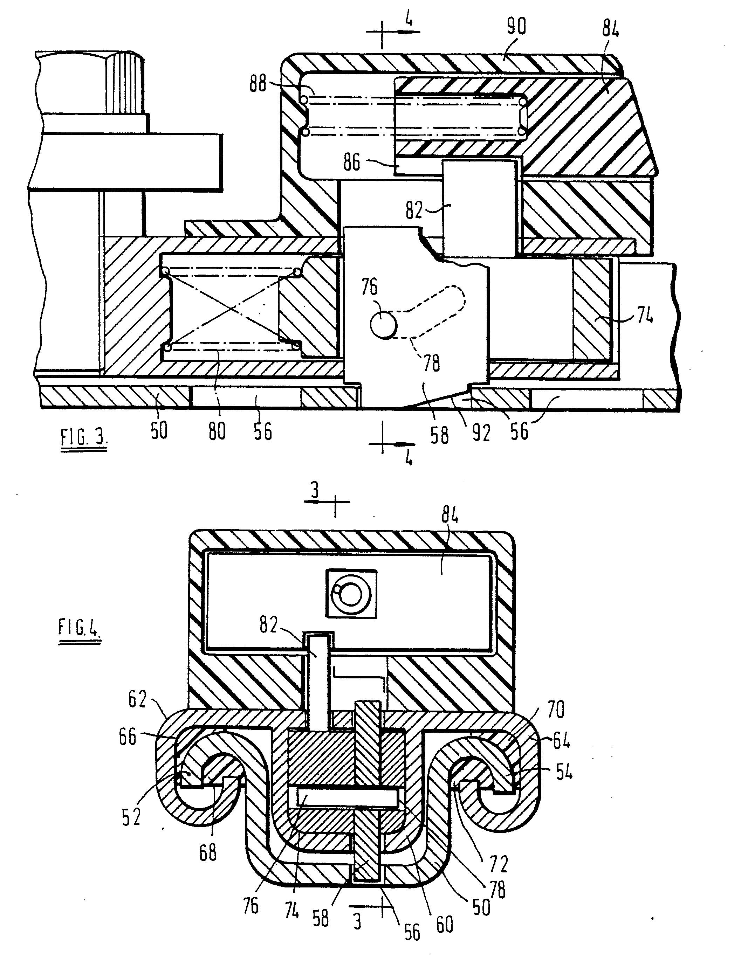

Referring to Figures 1 and 2, an adjustable shoulder anchorage assembly has a track 10 which, in use, would be bolted to the interior of a motor vehicle, for example the B-post when the assembly is to be used with a safety belt for a front seat. The track 10 has a central portion, containing a row of rectangular holes 12, and a pair of raised side flanges 14 and 16. The flanges 14 and 16 are embraced by U-shaped side flanges 18 and 20 formed on a traveller 22 which carries a pivotally mounted member 24 having a slot (not shown) for receiving a safety belt strap.

As can best be seen from Figure 2, the U-shaped flanges 18 and 20 are formed on a metal body portion 26 of rectangular cross-section which is received in the central recess between the two flanges 14 and 16 of the track. The body portion 26 has a central slot in which a latch member 28 is mounted for movement transversely of the track between an engaged position in which it projects into one of the slots 12 and a release position in which it is clear of the track 10. A camming member 30 is also received within the box formation of the body 26 and has a slot 32 through which the latch member 28 projects, the length of the slot 32 being sufficient to permit limited movement of the camming member 30 relative to the latch member 28 in a direction parallel to the track 10. The camming member 30 carries a U-shaped rod 34, the central portion of which projects through a slot 36 in the latch member and the side limbs of which are embedded in a manually actuable push-button 38 which is mounted in a plastics housing 40 secured to the body portion 26. The push-button 38 is thus coupled to the camming member 30 so that both are movable simultaneously in a direction parallel to the length of the track 10, a compression spring 42 in the body 26 biasing them into the position illustrated in Figure 1.

For most of its length, the slot 36 in the latch member 28 is inclined at an angle to the length of the track 10 such that depression of the push-button 38 to the left as viewed in Figure 1 causes the rod 34 to move the latch member 28 to its release position. However, when the latch member 28 is in its engaged position, the rod 34 is received in an end portion 44 of the slot 36 which is perpendicular to the direction of movement of the latch member 28 between its engaged position and its release position. Thus, a force on the latch member 28 tending to disengage it (for example an inertia force caused by lateral impact) cannot exert any force on the rod 34 which would tend to move the camming member 30 into a position in which the latch 28 could disengage.

The length of the track 10 is chosen in accordance with the required range of adjustment of the shoulder anchorage and the number of slots 12 is chosen in accordance with the number of alternative positions required. Inserts 46 and 48 of plastics material are provided between the flanges 14 and 16 of the track 10 and the U-shaped flanges 18 and 20 of the slider in order to reduce friction.

Figures 3 and 4 illustrate an alternative adjustable shoulder anchorage in accordance with the invention having a track 50 which differs from the track 10 in that its side flanges 52 and 54 are doubled back so that the overall cross-section of the track consists of a central U-shape with two smaller inverted U-shapes formed on the end of each side limb. In addition, the row of holes 56 which are engaged by the latch plate 58 are located to one side of the centre line of the track 50.

A traveller having a body portion 60 of rectangular cross-section, is slidably mounted on the track 50 by means of side flanges 62 and 64 which have their hook-like formations on their free ends to engage with the inverted U-shape formations 52 and 54 of the track, plastics inserts 66, 68, 70 and 72 being provided to reduce friction. The body portion 60 contains a camming member 74. The latch plate 58 extends through slots in both the body portion 60 and the camming member 74 and carries a pin 76 which engages in a slot 78 in the camming member 74. The slot 78 is the same shape as the slot 36 of Figures 1 and 2 but rotated through 180 degrees about the pin 76. Thus, movement of the camming member 74 in the longitudinal direction of the track 50 has exactly the same effect on the latch 58 as such movement of the camming member 30 has on the latch 28 of Figures 1 and 2 and movement of the latch from its engaged position in blocked in the manner already described. The camming member is biased into the position in which the latch 58 is retained in its engaged position by a spring 80.

In order to effect movement of the latch member 58 to its release position, the camming member 74 has a projection 82 which extends through a slot in the rectangular portions 60 of the traveller into engagement with a manually actuable push-button 84. In contrast to the arrangement illustrated in Figures 1 and 2, the projection 82 is not rigidly connected to the push-button 84. Instead, the projection 82 is received in a groove 86 in the push-button 84 which is separately biased into its release position by a spring 88 which engages with the inner end of the push-button housing 90. The effect of this is that, if the traveller stops at a position in which the latch member 58 is between adjacent openings 56, the push-button is displaced to its outer position by the spring 88. The latch 58 can then snap into engagement as soon as it comes into alignment with one of the holes 56. To facilitate this, the end of the latch 58 which engages with the track 50 has a bevil 92 on the side which is uppermost when the assembly is mounted in a vehicle.

It will be appreciated that an adjustable shoulder anchorage may be constructed having only one or two of the three features of Figures 3 and 4 which differ from the corresponding features of Figures 1 and 2 if desired.

## Claims

1. An adjustable shoulder anchorage assembly for a vehicle safety belt, comprising a vertically extending track (10, 50) mounted on the interior of a vehicle body above the level of the shoulders of an occupant of an adjacent seat, a traveller (22, 60) mounted on the track (10, 50), a guide member (24) secured to the traveller (22, 60) and having a slot for receiving the strap of a safety belt, a latch member (28, 58) movable transversely of the track (10, 50) between an engaged position in which a latching formation thereon is in engagement with one of a series of complementary formations (12, 56) on the track (10, 50) so as to inhibit movement of the traveller (22, 60) along the track (10, 50) and a release position in which the latching formation is disengaged from the track (10, 50), and manual release means (38, 84) for effecting disengagement of the latch member (28, 58), characterised in that the manual release means (38, 84) has a first cam formation (34, 76) operative to engage with a second cam formation (36, 78) on the latch member (28, 58) thereby to move the latch member (28, 58) between its engaged and its release positions in response to movement of the manual release means (38, 84), and resilient means (42, 88) are operative to bias the first cam formation (34, 76) into a position in which the latch member (28, 58) is in its engaged position, the mutually engaging surfaces of the cam formations (34, 76; 36, 78) being so oriented relative to the direction of movement of the latch member (28, 58) between its engaged position and its release position that application of a force to the latch member (28, 58) in a direction tending to move it towards its release position does not cause the movement of the first cam formation (34, 76) necessary to permit such movement of the latch member (28, 58).

2. An adjustable shoulder anchorage according to claim 1, wherein the mutually engaging surfaces of the cam formations (34, 76; 36, 78) are, when the latch member (28, 58) is in its engaged position, substantially perpendicular to the direction of movement of the latch member (28, 58) between its engaged position and its release position.

3. An adjustable shoulder anchorage according to claim 2, wherein the latch member comprises a latch plate (28, 58), the second cam formation comprises a slot (36, 78) therein having a first portion extending parallel to the direction of movement of the traveller (22, 60) along the track (10, 50), and the first cam formation comprises a cam follower (34, 76) engaging in the slot (36, 78).

4. An adjustable shoulder anchorage according to claim 1, 2 or 3, wherein the direction of movement of the manual release means (38, 84) is parallel to the direction of movement of the traveller (22, 60) along the track (10, 50).

FIG.1.

FIG.2.

FIG. 3.

FIG. 4.